# EUROPÄISCHE PATENTANMELDUNG

(11) **EP 0 950 600 A2**
(43) Veröffentlichungstag der Anmeldung: **20.10.1999**
(21) Anmeldenummer: 99107207.5
(22) Anmeldetag: 13.04.1999
(51) Int. Cl.: B62D 1/18, B62D 5/06

(54) **Lenkbetätigungsvorrichtung**

(30) Priorität: 17.04.1998 DE 19817184; 26.05.1998 DE 19823528
(71) Anmelder: STILL GMBH, D-22113 Hamburg (DE)
(72) Erfinder: Sellhorn, Gerhard, 21035 Hamburg (DE); Ballhausen, Stephan, Dipl.-Ing., 22609 Hamburg (DE)
(74) Vertreter: Kasseckert, Rainer

(57) **Zusammenfassung**

Gegenstand der Erfindung ist eine Lenkbetätigungsvorrichtung für ein Fahrzeug, insbesondere für ein Flurförderzeug, mit einem im Bereich eines Fahrerplatzes angeordneten Lenkrad (3), das mit einem hydraulischen Lenkventil (4) derart verbunden ist, daß eine Drehbewegung des Lenkrads (3) auf das Lenkventil (4) übertragen wird. Erfindungsgemäß bilden das Lenkrad (3) und das Lenkventil (4) eine Baueinheit und sind gemeinsam im Bereich des Fahrerplatzes angeordnet. Das Lenkrad (3) und das Lenkventil (4) sind mittels eines Bügels (5) an dem Fahrzeug befestigt, der einen sich zumindest teilweise in Querrichtung des Fahrerplatzes erstreckenden Abschnitt aufweist. Der Bügel (5) ist seitlich eines Fahrersitzes (1) oder seitlich eines Fußraums eines auf dem Fahrersitz (1) sitzenden Fahrers an dem Fahrzeug befestigt.

## Beschreibung

Die Erfindung betrifft eine Lenkbetätigungsvorrichtung für ein Fahrzeug, insbesondere für ein Flurförderzeug, mit einem im Bereich eines Fahrerplatzes angeordneten Lenkrad, das mit einem hydraulischen Lenkventil derart verbunden ist, daß eine Drehbewegung des Lenkrads auf das Lenkventil übertragen wird.

Lenkbetätigungsvorrichtungen der genannten Art werden in Fahrzeugen verschiedener Bauart, insbesondere aber in Flurförderzeugen wie beispielsweise Gabelstaplern, häufig eingesetzt. Eine Drehbewegung des Lenkrads oder ein auf das Lenkrad wirkendes Drehmoment werden mittels eines Lenkventils in ein hydraulisches Signal umgesetzt. Dieses Signal des Lenkventils wird über eine Hydraulikleitung einem hydraulischen Lenkungszylinder zugeführt, der mit den lenkbaren Rädern des Fahrzeugs verbunden ist und eine Lenkbewegung bzw. eine Lenkkraft erzeugt. Häufig ist das Lenkventil als Servoventil ausgeführt und mit einer Hydraulikpumpe verbunden.

Bei bekannten Anordnungen befindet sich zwischen dem Lenkrad und dem Lenkventil zur Übertragung einer Drehbewegung eine Lenkwelle, wobei das Lenkventil außerhalb einer Fahrerkabine des Fahrzeugs angeordnet ist. Die Lenkwelle befindet sich dabei in der Regel vor einem Fahrersitz und teilweise innerhalb des Fußraums eines auf dem Fahrersitz sitzenden Fahrers. Der Fußraum wird somit durch die Lenkwelle verkleinert, so daß die Beinfreiheit des Fahrers eingeschränkt wird.

Der vorliegenden Erfindung liegt die Aufgabe zugrunde, ein Fahrzeug mit verbesserter Beinfreiheit zur Verfügung zu stellen.

Diese Aufgabe wird erfindungsgemäß dadurch gelöst, daß das Lenkrad und das Lenkventil eine Baueinheit bilden und gemeinsam im Bereich des Fahrerplatzes angeordnet sind. Bei einer solchen Anordnung ist keine Lenkwelle erforderlich, da sich das Lenkventil direkt unterhalb des Lenkrads befindet, und die beiden Bauteile unmittelbar miteinander verbunden werden können.

Dabei ist es möglich, daß das Lenkventil im Bereich einer Fahrerkabine angeordnet ist. Auch bei Fahrzeugen mit Fahrerkabine befindet sich somit das Lenkventil am Fahrerplatz. Die Drehbewegung des Lenkrads wird also in der Fahrerkabine in ein hydraulisches Signal umgesetzt. Eine Übertragung der Drehbewegung des Lenkrads auf ein Bauteil außerhalb des Fahrerplatzes ist nicht erforderlich.

In einer vorteilhaften Ausgestaltung der Erfindung sind das Lenkrad und das Lenkventil mittels eines Bügels an dem Fahrzeug befestigt, der einen sich zumindest teilweise in Querrichtung des Fahrerplatzes erstreckenden Abschnitt aufweist. Die Querrichtung ist senkrecht zur Körperachse eines auf einem Fahrersitz sitzenden Fahrers definiert. Der betreffende Abschnitt des Bügels erstreckt sich in eine Richtung, die zumindest eine der Querrichtung entsprechende Komponente aufweist.

Besonders günstig ist es, wenn der Bügel seitlich eines Fahrersitzes oder seitlich eines Fußraums eines auf dem Fahrersitz sitzenden Fahrers an dem Fahrzeug befestigt ist. Er befindet sich somit außerhalb des Fußraums und behindert daher den Fahrer nicht.

Das Lenkrad kann von einer Betriebsposition in eine Außerbetriebsposition bewegt werden, wenn der Bügel schwenkbar an dem Fahrzeug befestigt ist. In der Betriebsposition des Bügels kann der Fahrer auf das Lenkrad zugreifen. Wenn sich der Bügel in Außerbetriebsposition befindet, ist ein unbehinderter Zugang zu dem Fahrerplatz möglich.

Der Bügel kann schwenkbar um eine horizontale Achse an dem Fahrzeug befestigt sein. Vorteilhaft ist es hierbei, wenn die horizontale Achse sich zumindest teilweise in Querrichtung des Fahrerplatzes erstreckt. Der Fahrer kann das Lenkrad dadurch in einfacher Weise zu sich hin in eine Betriebsposition ziehen oder von sich weg in eine Außerbetriebsposition schieben.

Besondere Vorteile ergeben sich, wenn der Bügel als Rückhaltebügel einer Fahrerrückhaltevorrichtung ausgebildet ist. Die Form des Bügels ist in dieser Weiterbildung so gestaltet, daß der Fahrer bei in Betriebsposition befindlichem Bügel den Fahrersitz nicht verlassen kann. Während des Betriebs des Fahrzeugs oder spätestens, wenn mittels einer geeigneten Sensorvorrichtung eine Unfallsituation erkannt wird, ist der Bügel hierzu in seiner Betriebsposition arretierbar.

Eine andere zweckmäßige Weiterbildung der Erfindung besteht darin, daß an dem Bügel mindestens eine Anzeigevorrichtung und/oder zusätzlich zu dem Lenkrad mindestens ein weiteres Bedienelement angeordnet ist. An den Bügel können hierdurch zumindest einige Anzeigevorrichtungen oder Bedienelemente angeordnet werden, die sich sonst im Bereich eines Armaturenbretts befinden.

Der Bügel enthält mindestens eine mit dem Lenkventil verbundene Hydraulikleitung. Diese in der Regel fünf Hydraulikleitungen verbinden das Lenkventil mit dem hydraulischen Lenkungszylinder.

Eine zweckmäßige Ausgestaltung liegt vor, wenn mindestens eine Hydraulikleitung als Rohrleitung ausgebildet ist, die ein tragendes Bauteil des Bügels bildet. Hierbei kann die Steifigkeit der Rohrleitung zur Kraftübertragung ausgenutzt werden.

Die Anzahl der Bauteile kann erheblich reduziert werden, wenn sämtliche tragenden Bauteile des Bügels von einer Rohrleitung oder von mehreren Rohrleitungen gebildet sind.

In einer anderen Ausführungsform ist mindestens ein tragendes Bauteil des Bügels von einem Profilkörper gebildet. Besonders gut ist eine Hydraulikleitung vor äußeren Einflüssen geschützt, wenn sie zumindest teilweise innerhalb des Profilkörpers angeordnet ist.

Weitere Vorteile und Einzelheiten der Erfindung werden anhand der in den schematischen Figuren dargestellten Ausführungsbeispiele näher erläutert. Dabei zeigt
- Figur 1: einen Fahrerplatz mit einer erfindungsgemäßen Lenkbetätigungsvorrichtung,
- Figuren 2a,b,c: den Querschnitt eines Bügels in verschiedenen Ausführungen.

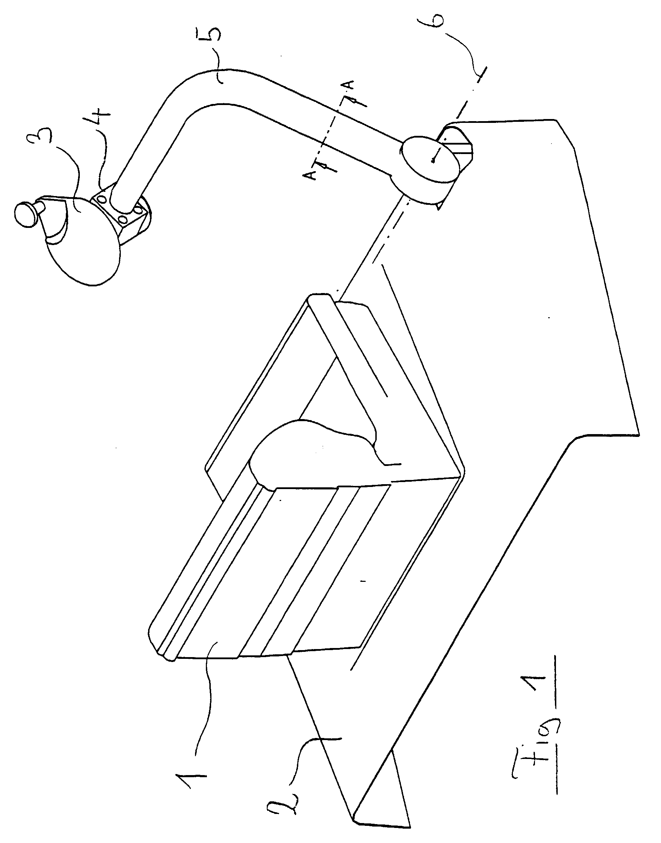

Figur 1 zeigt den Fahrerplatz eines Fahrzeugs mit einer erfindungsgemäßen Lenkbetätigungsvorrichtung. Ein Fahrersitz 1 ist auf einem Bauteil 2 des Fahrzeugs befestigt. Bei Flurförderzeugen stellt das Bauteil 2 häufig eine Batteriehaube dar. Vor dem Fahrersitz 1 befindet sich ein Lenkrad 3, das mit einem Lenkventil 4 eine Baueinheit bildet. Die Baueinheit aus Lenkrad 3 und Lenkventil 4 ist an einem Bügel 5 befestigt, der relativ zu dem Fahrersitz 1 um eine Achse 6 schwenkbar ist. Die Achse 6 erstreckt sich in Querrichtung des Fahrerplatzes.

In oder an dem Bügel 5 sind die an dem Lenkventil 4 angeschlossen Hydraulikleitungen angeordnet. Die Hydraulikleitungen können als Schlauchleitungen oder Rohrleitungen ausgebildet sein.

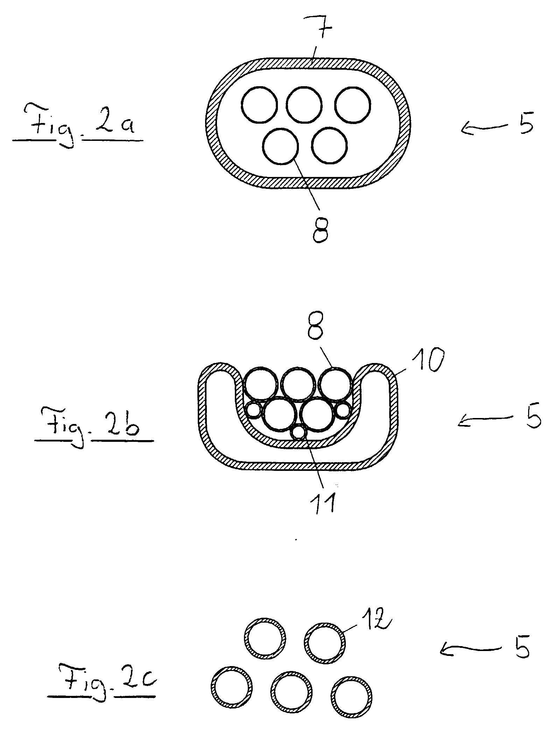

In den Figuren 2a,b,c sind verschiedene Varianten für den Aufbau des Bügels 5 abgebildet, wobei jeweils der Querschnitt A-A gemäß Fig. 1 dargestellt ist.

Figur 2a zeigt eine Anordnung, bei welcher der Bügel 5 als Trägerbauteil ein Hohlprofil 7 aufweist. Die Hydraulikleitungen sind vorzugsweise als Schlauchleitungen 8 ausgebildet und befinden sich innerhalb des Hohlprofils 7. Die Schlauchleitungen 8 sind durch das starre Hohlprofil 7 vor äußeren mechanischen Einflüssen geschützt.

Bei der Anordnung gemäß Figur 2b ist ein Trägerbauteil des Bügels 5 als halboffenes Profil 10 ausgeführt. Die Hydraulikleitungen sind auch hier vorzugsweise als Schlauchleitungen 8 ausgeführt und sind von dem halboffenen Profil 10 teilweise umschlossen. Auch bei dieser Ausführung sind die Schlauchleitungen 8 durch das Profil 10 vor mechanischer Beschädigung geschützt. Die Schlauchleitungen 8 sind darüber hinaus in einfacher Weise montierbar. In der Figur 2b ebenfalls dargestellt sind elektrische Leitungen 11, die an das Lenkrad 3, das Lenkventil 4 oder andere, an dem Bügel 5 angeordnete Bedienelemente oder Anzeigevorrichtungen angeschlossen sind.

Figur 2c zeigt eine Anordnung, bei der die Hydraulikleitungen als selbsttragende Rohrleitungen 12 ausgebildet sind. Die Rohrleitung 12 selbst bilden also den Bügel 5, so daß kein zusätzliches tragendes Bauteil erforderlich ist.

## Patentansprüche

1. Lenkbetätigungsvorrichtung für ein Fahrzeug, insbesondere für ein Flurförderzeug, mit einem im Bereich eines Fahrerplatzes angeordneten Lenkrad (3), das mit einem hydraulischen Lenkventil (4) derart verbunden ist, daß eine Drehbewegung des Lenkrads (3) auf das Lenkventil (4) übertragen wird, **dadurch gekennzeichnet**, daß das Lenkrad (3) und das Lenkventil (4) eine Baueinheit bilden und gemeinsam im Bereich des Fahrerplatzes angeordnet sind.

2. Lenkbetätigungsvorrichtung nach Anspruch 1, dadurch gekennzeichnet, daß das Lenkventil (4) im Bereich einer Fahrerkabine angeordnet ist.

3. Lenkbetätigungsvorrichtung nach Anspruch 1 oder 2, dadurch gekennzeichnet, daß das Lenkrad (3) und das Lenkventil (4) mittels eines Bügels (5) an dem Fahrzeug befestigt sind, der einen sich zumindest teilweise in Querrichtung des Fahrerplatzes erstreckenden Abschnitt aufweist.

4. Lenkbetätigungsvorrichtung nach Anspruch 3, dadurch gekennzeichnet, daß der Bügel (5) seitlich eines Fahrersitzes (1) oder seitlich eines Fußraums eines auf dem Fahrersitz (1) sitzenden Fahrers an dem Fahrzeug befestigt ist.

5. Lenkbetätigungsvorrichtung nach Anspruch 3 oder 4, dadurch gekennzeichnet, daß der Bügel (5) schwenkbar an dem Fahrzeug befestigt ist.

6. Lenkbetätigungsvorrichtung nach Anspruch 5, dadurch gekennzeichnet, daß der Bügel (5) schwenkbar um eine horizontale Achse (6) an dem Fahrzeug befestigt ist.

7. Lenkbetätigungsvorrichtung nach Anspruch 6, dadurch gekennzeichnet, daß die horizontale Achse (6) sich zumindest teilweise in Querrichtung des Fahrerplatzes erstreckt.

8. Lenkbetätigungsvorrichtung nach einem der Ansprüche 3 bis 7, dadurch gekennzeichnet, daß der Bügel (5) als Rückhaltebügel einer Fahrerrückhaltevorrichtung ausgebildet ist.

9. Lenkbetätigungsvorrichtung nach einem der Ansprüche 3 bis 8, dadurch gekennzeichnet, daß an dem Bügel (5) mindestens eine Anzeigevorrichtung und/oder mindestens ein zusätzliches Bedienelement angeordnet ist.

10. Lenkbetätigungsvorrictung nach einem der Ansprüche 3 bis 9, dadurch gekennzeichnet, daß der Bügel (5) mindestens eine mit dem Lenkventil (4) verbundene Hydraulikleitung enthält.

11. Lenkbetätigungsvorrichtung nach Anspruch 10, daß mindestens eine Hydraulikleitung als Rohrleitung (8) ausgebildet ist, die ein tragendes Bauteil des Bügels (5) bildet.

12. Lenkbetätigungsvorrichtung nach Anspruch 11, dadurch gekennzeichnet daß sämtliche tragenden Bauteile des Bügels (5) von einer Rohrleitung (8) oder von mehreren Rohrleitungen (8) gebildet sind.

13. Lenkbetätigungsvorrichtung nach einem der Ansprüche 3 bis 11, dadurch gekennzeichnet, daß mindestens ein tragendes Bauteil des Bügels (5) von einem Profilkörper gebildet ist.

14. Lenkbetätigungsvorrichtung nach Anspruch 13, dadurch gekennzeichnet, daß mindestens eine Hydraulikleitung zumindest teilweise innerhalb des Profilkörpers angeordnet ist.
